# EUROPEAN PATENT SPECIFICATION

(11) **EP 3 732 100 B1**
(45) Date of publication and mention of the grant of the patent: **19.01.2022**
(21) Application number: 18919401.2
(22) Date of filing: 24.12.2018
(51) Int. Cl.: B64C 3/56, B64C 11/28, B64C 39/02

(54) **WING DEPLOYMENT MECHANISM**
FLÜGELAUSFAHRMECHANISMUS
MÉCANISME DE DÉPLOIEMENT D'AILE

(30) Priority: 27.12.2017 TR 201722260
(43) Date of publication of application: 04.11.2020
(73) Proprietor: ROKETSAN ROKET SANAYII TICARET A.S., Elmadag/Ankara (TR)
(72) Inventor: UZUN, Can, Ankara (TR)
(86) International application number: PCT/TR2018/000124
(87) International publication number: WO 2020/022972

(56) References cited:
- WO-A1-2016/196277
- CN-A- 105 799 915
- US-A1- 2012 280 080

## Description

### TECHNICAL FIELD

Present invention relates to a wing folding assembly, particularly folding mechanism suitable for compact unmanned aerial vehicle or other flying objects.

### BACKGROUND ART

In prior art, foldable wing mechanisms utilized by folding the wings along a vehicle body leads an asymmetrical fashion of the position of the wings in flight. Such a requirement causes unstable flight dynamics and unpredictable outputs. Operation of vehicle assembly is restricted due to the outputs. Less maneuver capability requires better balancing ability and therefore more complex designs.

A known folding mechanism provide symmetrical positioning by decreasing wing height, changing center of rotation and widen the vehicle body. Efficiency of the wings in comparison to volume ratio of the complete vehicle decrease in such a system. For example, see wing deployment mechanism in US9689650B2.

Another known folding mechanism aims to reduce positional differences of corresponding wings in flight by means of a spiral spring. An integrated system explained in PCT/US2016/034613 operates with spiral spring. A movement required for the system is provided by an energy storage means.

Another known folding mechanism aims to reduce positional differences of corresponding wings in flight by means of a torsional spring. An integrated system explained in US 2012/0280080 A1 operates with torsional spring. A movement required for the system is provided by a rotational energy storage means.

CN105799915 discloses the invention relates to wings of an unmanned aerial vehicle, in particular to a synchronous folding and unfolding mechanism of the wings of the unmanned aerial vehicle. According to the technical scheme, the unmanned aerial vehicle is restrained by a launching barrel before being launched, the wings are in a folded state, a rack, a wing sheet A and a wing sheet B are stacked together in a vertically parallel mode, an unfolding driving spring is subjected to torsion, and a locking driving spring is pressed; when the unmanned aerial vehicle is launched and separated from the barrel, the wing sheet A and the wing sheet B are unfolded towards the left side and the right side around an annular boss under the action of the unfolding driving spring, and meanwhile a tenon A and a tenon B are kept synchronous under restraint of an unfolding synchronization sheet and a limiting strip; after the wing sheet A and the wing sheet B are unfolded to the set position, the locking driving spring drives the lower wing to move upwards, a lower wing boss and an upper wing gap are clamped, an upper wing boss and a lower wing gap are clamped, and locking in the rotating direction is achieved.

### BRIEF DESCRIPTION OF THE INVENTION

Object of the invention is to provide a stable wing folding mechanism along the same horizontal plane with simple geometry and produced in a cost effective manner.

In order to achieve above objective, invention comprises a wing folding mechanism for a pair of wings comprising a lower wing and a co-operative upper wing extending opposite to each other in a deployment position and approach each other when rotated from respective remote ends to a resting position. Deployment mechanism comprises, multiple uniform spherical rolling element slots located at upper wing root and lower wing root so that allowing lower wing and upper wing extending symmetrical to each other; mutually positioned spherical rolling elements located to these spherical rolling element slots; an alignment element positioned in coaxially with wing pin holes and a linear energy storage element located around alignment element that applies force to upper wing which stored as energy during folding of the wings. Wings are deployed by actuation of spherical rolling element slots. The potential energy accrued when the wings are folded are transferred to the spherical rolling element slots when the wings are released. Each one of the spherical rolling element slots have the same form at the wings. The wings are forced to a same angular movement while deployed. In this way, the wings keep the same angular speed when the vehicle leave the casing. This balances the inertia of the vehicle assembly.

The wings are wide open position and stabilized when the vehicle assembly is initially formed. The wide open wings provide inertia when there is no excitement. The upper wing moves vertically in addition to the rotation when the wings are moved towards each other and the vehicle body. The shifting process provided by the rolling movement of the spherical rolling elements located in spherical rolling element slots and consequent vertical transport of the upper wing. When the wings rotate 90° they fold onto the vehicle body and the upper wing is disposed on the lower wings. Spherical rolling elements inside the spherical rolling elements slots rolls between the wings during the deployment and folding action. They bear the upper wing during the roll movement. Spherical rolling elements move inwardly through the wings during the bearing process by the guidance of spherical rolling elements slots. Wing geometry allow both circular and vertical movement. The wings compress the linear energy storage element when rotated 90°. The increasing compression force during the compression process pushes wings to be opened. When the wings are released (left the casing) the energy stored by the linear energy storage element urges the upper wing to achieve vertical movement. The upper wing urged in vertical direction transmits the force to the spherical rolling element. Spherical rolling elements are provided at the lower wing root and upper wing root. Spherical rolling element movements are restricted by the spherical rolling element slots. Spherical rolling elements are disposed at the lowest position of the spherical rolling element slots by rolling movement in downwards direction inside the spherical rolling element slots. Spherical rolling element slots are forcing upper wing to both vertical and circular movement and to circular for the lower wing. The force exerted allow wings to be completely deployed. Spherical rolling elements reach the highest level of the spherical rolling elements slots when wings rotate 90°. Two pieces of spherical rolling elements can be adapted for the conditions where wings are completely folded inside the canister and needs to be switched to the in flight position when the deployment limit needs to be configured to 90° and less than 90° more than 60°. If the expanding position needs to be 60° and less than 60° and more than 45° then 2 or 3 pieces of spherical rolling elements can be employed. 2, 3 or 4 spherical rolling elements can be employed if the expanding is 45° and less than 45° and more than 30°.

In order to spherical rolling elements slots inside the spherical rolling elements to climb, rolling friction force between the spherical rolling element slots and the spherical rolling elements should be greater than the sliding frictional forces. Spherical rolling elements should be tightened between spherical rolling element slots to prevent stuck or non-synchronized deployment wing deployment problems. Linear energy storage element is utilized to compress the spherical rolling elements between the spherical rolling element slots.

Alignment pin is located to deploy all the components of the system in a single rotational axis on vehicle body.

In a preferred embodiment flat elements are located at the both ends of the linear energy storage element. In order to prevent linear energy storage element to be twisted during the compression, flat elements are utilized at the both ends of the linear energy storage element. Additionally, the corresponding walls in contact with the linear energy storage element needs to be restricted to the linear movement only. The flat element arranged at the upper wing also serve this objective.

In a preferred embodiment of the invention, a limitation element is adapted to secure positions of the spherical rolling elements, the flat element and the linear energy storage element in the system. The system requires only lower wing for a circular movement. The limitation element on the lower wing fulfils this requirement. Limiting the upper movement of the linear energy storage element while the wings are folded and therefore compression is needed. In order to comply this a limitation element is utilized in addition of the flat element over the linear energy storage element.

During the prototype production studies compression spring is employed as a linear energy storage element, ball is used as a spherical rolling element, washer is used as a flat element and retaining ring is used as a limitation element. In an alternative embodiment, gas spring or rubber can be replaced with the compression spring, washer can be replaced by a flat plate and nut can replace the retaining ring and stepped pin can be used in a replacement to the alignment pin.

Subject matter invention can be adapted for use in applications where the symmetrical wing and completely folding of the wings on top of each other are necessary.

Invention provides both lean design and low production costs and ease also reduce to determine flight dynamics and development time.

### DESCRIPTION OF THE DRAWINGS

Figure 1 shows a general outline of the vehicle according to the invention
Figure 2 shows the vehicle body wherein the lower wingis secured to the body
Figure 3 shows vehicle assembly mechanics of the entire vehicle as a whole
Figure 4 shows vehicle assembly in a release position
Figure 5 shows vehicle assembly with lower wing and upper wing in a folded position
Figure 6 shows geometry of the wings and spherical rolling element slots
Figure 7 shows alignment pin and mechanical interfaces
Figure 8 shows vehicle body and mechanical interfaces

### DETAILED DESCRIPTION

In this detailed description, subject matter invention is explained with reference to the drawings without any limitation only to disclose it further.

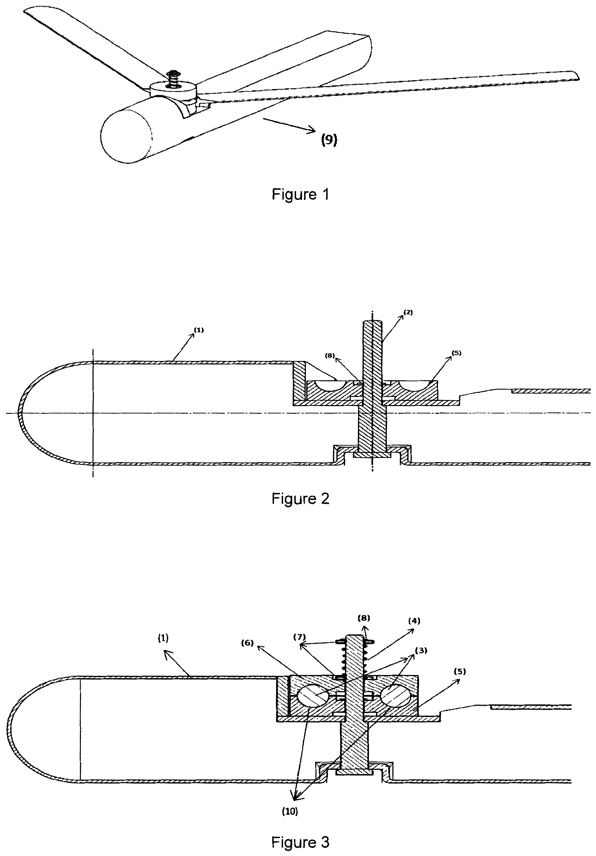

In Figure 1, a vehicle assembly (9) is shown wherein a working embodiment of a wing deployment mechanism is mounted. Folding mechanism comprises eleven features including; a vehicle body (1), an alignment pin (2), two rolling elements (3), a compression spring (4), lower wing (5), upper wing (6), two washers (7) and two retaining ring (8).

In Figure 2, lower wing (5) mounted to the vehicle body (1) is shown. Lower wing (5) is secured to the vehicle body (1) by means of an alignment pin (2) is passing through a pin hole (19) such that bottom section (11) contacts to a bottom section wall (16) and an intermediate section (14) contact to an intermediate section wall (17) and then to the upper section (15) by means of the alignment pin (2) through a wing pin hole (18) in a way that a roll housing (10) facing away from the vehicle body (1) and lower wing (5) is secured to the vehicle body (1) by a retaining ring (8) which is mounted into a lower retaining ring slot (12)

In Figure 3, vehicle assembly (9) cross-section is shown from its mechanical joint. A rolling element (3) is provided inside the ball bearing (10) at the lower wing (5). The rolling elements (3) descended to the lowest position due to the ball bearing (10) geometry. A wing pin hole (18) of the upper wing (6) fit to the upper section (15) of the alignment pin (2) so that the ball bearing (10) of the lower wing (5) and upper wing (6) match each other. One of the washers (7) is arranged on the upper wing so that the washer (7) is disposed on the upper section (15) of the alignment pin (2).

The compression spring (4) is aligned over the washer (7) in such a way that it fits over the upper section (15) of the alignment pin (2). One of the washers (7) arranged on the upper section (15) of the alignment pin (2) in a fitting manner. The compression spring (4) is secured between both washers (7) when the retaining ring (8) mounted to the upper retaining ring slot (13). Vehicle assembly (9) is prepared by above explained steps.

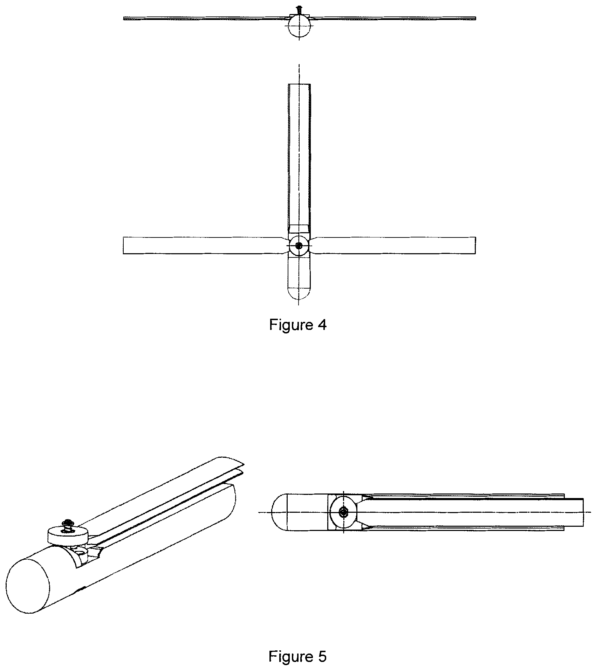

Figure 4 shows that wings are in open and symmetrical position in a stabile manner when force is not exerted to the vehicle assembly (9). A pretension is present on the compression spring (4) and allow wings to keep their position.

In figure 5, relative rotational movement is shown when the lower wing (5) and upper wing (6) is having 180° angle to each other. The wings (4-5) are folded over the vehicle assembly (9) when it is desired that the wings (5-6) of the vehicle body (9) operated in a folded position (transportation, storage, etc.). While the lower wing (5) has only rotational freedom over the alignment pin (2), the upper wing (6) has both rotational freedom over the alignment pin (2) and vertical movement along the upper section (15). The rolling elements (3) in the ball bearing (10) climb by rolling inside the ball bearing (10) of corresponding wings when the lower wing (5) and the upper wing (6) rotates relative to each other. Such a climbing motion allow elevation of the upper wing (6). After the wing folding process, there is no loss of wing width. Besides, necessity to design of wings coaxial rotational center and complex production processes are eliminated.

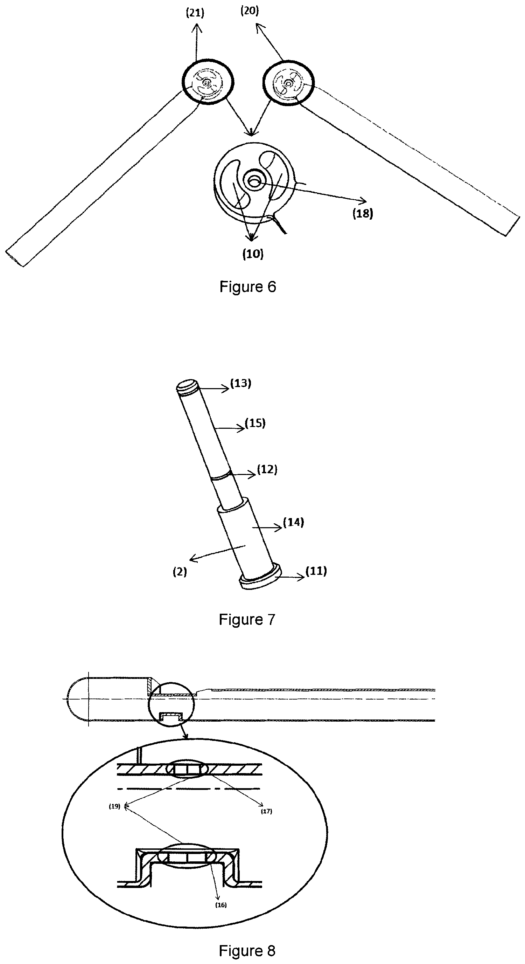

In Figure 6, the rolling element housing (10) at the wing pin hole (18) of a lower wing root (20) and upper wing root (21) is shown. The rolling element housing (10) with various depth provide space for the rolling elements (3) to be compressed and climb by rolling when the lower wing (5) and the upper wing (6) positioned reciprocally.

In Figure 7, alignment pin (2) is shown. The bottom section (11) is employed to transport compression force of the compression spring (4) to the vehicle body (1). The lower retaining slot (12) is utilized for mounting of the retaining ring (8) which prevent the lower wing (5) to be separated from the vehicle body (1). The upper section (15) allows the lower wing (5) and the upper wing (6), the washers (7) and the compression spring (4) to be aligned coaxially. The intermediate section (14) is formed to keep integrity of the system in case of a damage on the bottom section (11) or lower section wall (16). The intermediate section wall (17) is provided to support against the compression force of the compression spring (4) in case of a load support by the intermediate section (14). The retaining ring (8) inserted into the upper retaining ring slot (13) has a same function with the bottom section (11). The retaining ring (8) blocking compression spring (4) in expanding direction is disposed into the upper retaining ring slot (13).

In Figure 8, the bottom section wall (16) and intermediate section wall (17) is shown. The bottom section (11) and intermediate section (14) of the alignment pin (2) is in contact with the walls (16, 17) accordingly. Stored energy on the compression spring (4) during the folding of the lower wing (5) and the upper wing (6) entail pull of the alignment pin (2) to upwards direction. The contact of the walls (16, 17) and sections (11, 14) allow position of the alignment pin (2) to be kept. The wings (5, 6), compression spring (4), retaining ring (8) and washers (7) are engage their respective correct position by means of use of the pin housing (19). Alignment pin (2) align the vehicle body (1), the wings .(5, 6), compression spring (4), retaining ring (8) and washers (7) inside the pin housing (19).

### REFERENCE NUMBERS

The parts on the drawings are numbered according to the list as shown below.

| | | | |
|---|---|---|---|
| 1: | Vehicle body | 12: | Lower retaining ring slot |
| 2: | Alignment element | 13: | Upper retaining ring slot |
| 3: | Spherical Rolling element | 14: | Intermediate section |
| 4: | Linear energy storage element | 15: | Upper section |
| 5: | Lower wing | 16: | Lower section wall |
| 6: | Upper wing | 17: | Intermediate section wall |
| 7: | Flat element | 18: | Wing pin hole |
| 8: | Limitation element | 19: | Pin hole |
| 9: | Vehicle assembly | 20: | Lower wing root |
| 10: | Spherical Rolling Element Slot | 21: | Upper wing root |
| 11: | Lower section | | |

## Claims

1. A wing folding mechanism for a pair of wings, comprising a lower wing (5) and a co-operative upper wing (6) extending opposite to each other in a deployment position and approach each other when rotated from respective remote ends to a resting position **characterized in that** a spherical rolling element slot (10), adapted to receive a number of uniform spherical rolling elements, is provided at a corresponding lower wing root (20) and a corresponding upper wing root (21), so that the lower wing (5) and the upper wing (6) are allowed to extend symmetrical to each other; a plurality of spherical rolling elements (3) are disposed at the spherical rolling element slots (10); an alignment element (2) is positioned coaxially with a wing pin hole (18) and a linear energy storage element (4) is arranged in a such manner that release of the stored energy accrued during the folding of the wings deploys the wings by actuation of the spherical rolling element slots and is disposed around the alignment element (2) to exert a pressing force to the upper wing (6), and the rolling elements (3) in the slots (10) climb by rolling inside the slots 10) of the corresponding wings when the lower wing (5) and the upper wing (6) rotate relative to each other during the folding of the wings.

2. A wing folding mechanism according to claim 1, wherein flat elements (7) are provided at the both ends of the linear energy storage element (4).

3. A wing folding mechanism according to claim 2, wherein a limitation element (8) is adapted to secure positions of the spherical rolling elements (3), the flat elements (7) and the linear energy storage element (4).

4. A wing folding mechanism according to claims 2-3, wherein the linear energy storage element (4) is arranged for being compressed between two flat holding elements (7).

5. A wing folding mechanism according to any one of the preceding claims, wherein the spherical rolling elements (3) are in a form of balls.

6. A wing folding mechanism according to any one of the preceding claims, wherein the linear energy storage element (4) comprises a compression spring.

7. A wing folding mechanism according to any one of the preceding claims, wherein the linear energy storage element (4) comprises a gas spring.

8. A wing folding mechanism according to any one of the preceding claims, wherein the linear energy storage element (4) comprises a rubber.

9. A wing folding mechanism according to any one of the preceding claims, wherein the flat element (7) comprises a washer.

10. A wing folding mechanism according to any one of the preceding claims, wherein the flat element (7) is in a form of a flat plate.

11. A wing folding mechanism according to any one of the preceding claims, wherein the limitation element (8) is a retaining ring.

12. A wing folding mechanism according to any one of the preceding claims, wherein the limitation element (8) is a nut.

13. A wing folding mechanism according to any one of the preceding claims, wherein the alignment element (2) is an alignment pin.

14. A wing folding mechanism according to any one of the preceding claims, wherein the alignment element (2) is a stepped pin.

## Patentansprüche

1. Ein unterer Flügel, der in einer ausgefahrenen Position entgegengesetzt zueinander verläuft und konvergiert, wenn er von seinen jeweiligen distalen Enden in eine Ruheposition (5) gedreht wird, und ein oberer Flügel, die zusammenarbeiten, ein Blattfaltmechanismus für ein Paar von Blättern, der Folgendes umfasst (6), ein Gehäuse (10) für sphärische Rollelemente, das eine entsprechende untere Flügelwurzel (20) aufweist, die es dem unteren Flügel (5) und dem oberen Flügel (6) ermöglicht, sich symmetrisch zueinander zu erstrecken, und das angepasst ist, um eine Vielzahl von gleichförmigen sphärischen Rollelementen aufzunehmen, die in einer oberen Flügelwurzel (21) vorgesehen sind; Anordnen einer Vielzahl von kugelförmigen Wälzkörpern (3) in den Schlitzen für die kugelförmigen Wälzkörper (10); koaxiales Positionieren eines Ausrichtungselements (2) mit einem Flügelstiftloch (18) und Anordnen des linearen Energiespeicherelements (4), um die gespeicherte Energie freizusetzen, die während des Faltens der Flügel angesammelt wurde, um sich bei Betätigung der Schlitze für die kugelförmigen Wälzelemente zu entfalten, und um den oberen Flügel (6) um das Ausrichtungselement (2) herum anzuordnen, um eine Druckkraft aufzubringen und die Wälzkörper (10) in dem Kugellager (3), **dadurch gekennzeichnet, dass**, wenn der untere Flügel (5) und der obere Flügel (6) sich relativ zueinander drehen, die entsprechenden Flügel sich durch Abrollen innerhalb des Kugellagers (10) erheben.

2. Faltmechanismus nach Anfrage 1, wobei die flachen Elemente (7) an beiden Enden des linearen Energiespeicherelements (4) vorgesehen sind.

3. Faltmechanismus nach Anfrage 2, wobei ein Begrenzungselement (8) die Positionen der kugelförmigen Wälzkörper (3), der flachen Elemente (7) und der linearen Energiespeicherelemente (4) fixieren kann.

4. Faltmechanismus nach einem der Anfragen 2 bis 3, wobei das Ausrichtelement (2) zum Einklemmen zwischen den beiden geraden Halteelementen (7) angeordnet ist.

5. Faltmechanismus nach einem der vorhergehenden Anfragen, wobei die kugelförmigen Wälzkörper (3) als Kugeln ausgebildet sind.

6. Faltmechanismus nach einem der vorhergehenden Anfragen, wobei das lineare Energiespeicherelement (4) eine Druckfeder umfasst.

7. Faltmechanismus nach einem der vorhergehenden Anfragen, wobei das lineare Energiespeicherelement (4) eine Gasfeder umfasst.

8. Faltmechanismus nach einem der vorhergehenden Anfragen, wobei das lineare Energiespeicherelement (4) einen Gummi umfasst.

9. Faltmechanismus nach einem der vorhergehenden Anfragen, wobei das flache Element (7) eine Unterlegscheibe aufweist.

10. Faltmechanismus nach einem der vorangehenden Anfragen, wobei das flache Element (7) als flache Platte ausgebildet ist.

11. Faltmechanismus nach einem der vorhergehenden Anfragen, wobei das Begrenzungselement (8) ein Haltering ist.

12. Faltmechanismus nach einem der vorhergehenden Anfragen, wobei das Begrenzungselement (8) eine Mutter ist.

13. Faltmechanismus nach einem der vorangehenden Anfragen, wobei das Ausrichtelement (2) ein Ausrichtstift ist.

14. Faltmechanismus nach einem der vorangehenden Anfragen, wobei das Ausrichtelement (2) ein Stufenstift ist.

## Revendications

1. Il est mécanisme de pliage de volet pour une paire d'ailes comprenant un volet inférieur (5) et un volet supérieur coopérant (6) qui se font face dans une position déployée et convergent lorsqu'ils sont tournés de leurs extrémités distales respectives vers une position de repos et il est caractérisé avec l'adapter pour recevoir un grand nombre d'éléments roulants sphériques uniformes prévu dans un boîtier d'élément roulant sphérique (10), un pied d'aile inférieur correspondant (20) et un pied d'aile supérieur (21) permettant à l'aile inférieure (5) et à l'aile supérieure (6) de s'étendre symétriquement l'un par rapport à l'autre et avec en plaçant plus d'un élément roulant sphérique (3) dans les fentes d'élément roulant sphérique (10) et avec relèvement des pales correspondantes par roulement dans le roulement à billes (10) placer l'élément d'alignement (2) autour de celui-ci, et lorsque les éléments roulants (3) dans le roulement à billes (10) tournent l'un par rapport à l'autre, l'aile inférieure (5) et l'aile supérieure (6) être agencé de manière à libérer l'énergie accumulée stockée et à appliquer une force de pression sur l'aile supérieure (6) pendant la positionnement coaxial d'un élément d'alignement (2) avec un trou d'axe d'aile (18) et le pliage des ailes pour déployer l'élément linéaire de stockage d'énergie (4) par actionnement des fentes sphériques de l'élément roulant.

2. Mécanisme de pliage selon la revendication 1, dans lequel les éléments plats (7) sont prévus aux deux extrémités de l'élément linéaire de stockage d'énergie (4).

3. Mécanisme de pliage selon la revendication 2, dans lequel un élément de limitation (8) est adapté pour fixer les positions des éléments roulants sphériques (3), de l'élément plat (7) et des éléments linéaires de stockage d'énergie (4).

4. Mécanisme de pliage selon les revendications 2-3, dans lequel l'élément d'alignement (2) est agencé pour une compression entre les deux éléments de maintien droits (7).

5. Mécanisme de pliage selon l'une quelconque des revendications précédentes, dans lequel les éléments roulants sphériques (3) se présentent sous la forme de billes.

6. Mécanisme de pliage selon l'une quelconque des revendications sprécédentes, dans lequel l'élément de stockage d'énergie linéaire (4) comprend un ressort de compression.

7. Mécanisme de pliage selon l'une quelconque des revendications précédentes, dans lequel l'élément linéaire de stockage d'énergie (4) comprend un ressort à gaz.

8. Mécanisme de pliage selon l'une quelconque des revendications précédentes, dans lequel l'élément linéaire de stockage d'énergie (4) comprend un caoutchouc.

9. Mécanisme de pliage selon l'une quelconque des revendications précédentes, dans lequel l'élément plat (7) comprend une rondelle.

10. Mécanisme de pliage selon l'une quelconque des revendications précédentes, dans lequel l'élément plat (7) se présente sous la forme d'une plaque plate.

11. Mécanisme de pliage selon l'une quelconque des revendications précédentes, dans lequel l'élément de limitation (8) est un anneau de retenue.

12. Mécanisme de pliage selon l'une quelconque des revendications précédentes, dans lequel l'élément de limitation (8) est un écrou.

13. Mécanisme de pliage selon l'une quelconque des revendications précédentes, dans lequel l'élément d'alignement (2) est une broche d'alignement.

14. Mécanisme de pliage selon l'une quelconque des revendications précédentes, dans lequel l'élément d'alignement (2) est une goupille étagée.
